# EUROPÄISCHE PATENTSCHRIFT

(11) **EP 0 313 979 B1**
(45) Veröffentlichungstag und Bekanntmachung des Hinweises auf die Patenterteilung: **07.04.1993**
(21) Anmeldenummer: 88117435.3
(22) Anmeldetag: 19.10.1988
(51) Int. Cl.: B29C 41/26, B32B 31/08

(54) **Verfahren zur Herstellung kratzfest beschichteter extrudierter Kunststoffbahnen**
Method for producing extruded plastic sheets with scratch resistant coating
Procédé de fabrication de feuilles en plastique extrudées, enduites d'une couche résistante à l'abrasion

(30) Priorität: 27.10.1987 DE 3736280
(43) Veröffentlichungstag der Anmeldung: 03.05.1989
(73) Patentinhaber: Röhm GmbH, 64293 Darmstadt (DE)
(72) Erfinder: Vetter, Heinz, Dr.-Ing., D-6101 Rossdorf 1 (DE); Siol, Werner, Dr., D-6100 Darmstadt-Eberstadt (DE)

(56) Entgegenhaltungen:
- EP-A- 0 171 549
- DE-A- 2 541 784
- FR-A- 2 252 197
- US-A- 3 032 815

## Beschreibung

### Gebiet der Erfindung

Die Erfindung betrifft ein Verfahren zur Herstellung kratzfest beschichteter Kunststoffbahnen durch Formen einer thermoplastischen Formmasse zu einem bahnförmigen Strang und Glätten mittels eines Walzenglättwerks, wobei die Bahn mit einem zur Bildung einer kratzfesten Oberfläche geeigneten Material beschichtet wird.

### Stand der Technik

Die Herstellung kratzfest beschichteter extrudierter Kunststoffbahnen in einem Arbeitsgang ist nicht bekannt.

Dagegen ist es bekannt, nach dem Spritzgußverfahren hergestellte Formkörper aus Kunststoff nachträglich kratzfest zu beschichten, indem man sie in eine Lösung eines zur Bildung einer kratzfesten Schicht geeigneten Materials eintaucht, das Lösemittel verflüchtigt und die Schicht aushärtet. Bei dem zweiten in der DE-C 24 55 715 beschriebenen Verfahren wird dazu eine Lösung verwendet, die eine radikalisch polymerisierbare Verbindung mit wenigstens drei Acryl- oder Methacrylgruppen und einen radikalbildenden Initiator enthält. Durch die nachträgliche Beschichtung wird die Maßgenauigkeit des Formteils verändert. Weiterhin kann durch das in der Beschichtungslösung enthaltene Lösemittel Rißbildung in dem Kunststoffteil verursacht werden.

Gemäß DE-A 20 58 504 wird eine Glasplatte mit einem flüssigen, zu einem kratzfesten Beschichtungskunststoff härtbaren Gemisch beschichtet, eine Platte aus Kunststoff unter Vermeidung des Einschlusses von Luftblasen aufgelegt, die noch freie Oberfläche der Kunststoffplatte mit dem flüssigen Gemisch beschichtet, eine zweite Glasplatte aufgelegt, die Schichten des Gemisches gehärtet und die Glasplatten abgelöst. Dieses Verfahren gestattet zwar die Herstellung maßgenauer Kunststoffplatten mit kratzfester Oberfläche, eignet sich aber nicht zur Herstellung anders geformter Formkörper, wie Kunststoffbahnen.

Zur Herstellung beschichteter Spritzgußteile wird in der EP-A 123 374 vorgeschlagen, nach der Erzeugung eines Spritzgußteil das Formwerkzeug leicht zu öffnen, eine flüssige Masse zur Bildung einer Oberflächenschicht einzuspritzen und das Werkzeug wieder zu schließen. Die Masse wird durch Drehbewegungen der Formhälften während des Schließvorganges auf der Oberfläche des Formteils verteilt und härtet danach aus. Abgesehen davon, daß viele Spritzgußformen Drehbewegungen zur Verteilung der nachgespritzten Masse nicht gestatten würden, wird der Aufbau des Formwerkzeugs durch die Anbringung der Drehvorrichtung aufwendig und teuer.

Bei einer Reihe weiterer bekannter Verfahren, die in der Kunststofftechnik als "In-Mold-Coating"-Verfahren bekannt sind, werden Formteile mit einer kratzfesten Oberflächenschicht dadurch erzeugt, daß man die formbildende Oberfläche eines Spritzgußwerkzeugs mit einer kratzfesten Schicht versieht und in die so vorbereitete Form eine härtbare Masse zur Bildung des inneren Formkörpers einbringt und aushärtet. So wird bei dem ersten Verfahren der DE-C 24 55 715 auf die innere Formwand eine Schicht eines Überzugsmaterials aufgetragen und unter einer sauerstofffreien Atmosphäre photochemisch gehärtet. Anschließend wird ein Monomeres, das für die Bildung des Formkörpers vorgesehen ist, z.B. ein Methacrylatsirup, in die Form gegeben und unter vorherbestimmten Bedingungen polymerisiert. Dabei verbindet sich die auf die Formwand aufgebrachte Schicht mit dem entstehenden Polymerisatkörper und kann nach der Polymerisation mit diesem aus der Form entnommen werden.

Bei einem sehr ähnlichen Verfahren gemäß DE-C 21 64 716 wird die auf die Forminnenwand aufgetragene Beschichtung mit einer Folie abgedeckt und mittels radikalischer Initiatoren gehärtet, wodurch die Anwendung eines sauerstofffreien Schutzgases entbehrlich wird. Nach der Aushärtung der Beschichtung wird die Folie abgezogen und ein Monomeres für den Kunstharzkern eingefüllt und polymerisiert. In entsprechender Weise wird bei den Verfahren gemäß DE-A 31 40 316 und 30 28 562 gearbeitet, wo nach Beschichtung der Formwände mit gefärbtem Material ein ungesättigtes Polyesterharz in den Formhohlraum eingespritzt und ausgehärtet wird.

Nach DE-A 32 03 540 werden Spritzgußteile mit kratzfester Oberfläche erzeugt, indem man in das Spritzgußwerkzeug einem kratzfest beschichteten Folienabschnitt einlegt und dann eine thermoplastische Formmasse einspritzt, die sich mit dem Folienabschnitt unter dem Formmassendruck verbindet.

Zur Herstellung von Spritzgußteilen mit einer oberflächlichen Farbschicht wird in DE-C 28 03 144 vorgeschlagen, auf die Innenseite eines Spritzgußwerkzeugs einen Lackfilm aufzutragen und zu härten. Danach wird das Werkzeug geschlossen und eine Formmasse eingespritzt.

Gemäß DE-A 24 48 477 wird die Innenseite eines heißen Formwerkzeugs elektostatisch mit einem thermoplastischen Pulverharz beschichtet, das dort zu einer Schicht zusammensintert. Anschließend wird eine treibmittelhaltige Formmasse eingespritzt. Man erhält einen SchaumstoffFormkörper mit einer Oberflächenschicht aus dem thermoplastischen Material, das eine höhere Kratzfestigkeit als der Schaumstoffkörper hat.

Nach dem Verfahren von EP-A 171 549 werden Skilaufsohlenbeläge hergestellt, indem auf eine thermoplastische Kunststoffbahn bereichsweise feste, kleinteilige Materialien wie Fasern, Körner oder Pulver aufgebracht und in einem Walzenglättwerk eingewalzt werden. Es handelt sich also um die rein physikalische Verbindung einer Kunststoffschmelze mit festem, feinteiligem Material. Dieses Material wird mittels einer perforierten Vakuumschmelze zu einer Materialschicht ausgebreitet, die dann auf die thermoplastische Bahn übertragen wird.

Gemäß DE-A 25 41 784 werden in einem Walzenglättwerk zwei thermoplastische Kunststoffbahnen getrennt erzeugt und unter Druck verbunden und zu einer zweischichtigen Folienbahn geformt. Die beiden Schichten werden auf rein physikalischem Wege durch Abkühlung der Schmelzen unter die Erweichungstemperatur miteinander verbunden.

Beim Verfahren der US-A 3 032 815 wird ein chemisch härtbares Reaktivharz auf die Oberfläche einer auf Reaktionstemperatur erhitzten Walze aufgetragen und entweder zu einer Folie oder zu einer Beschichtung einer Faserbahn gehärtet. Die zu beschichtenden Substratbahnen sind Gewebe- oder Faservliesbahnen, in denen sich das flüssig aufgetragene Reaktivharz vor der Aushärtung verankert.

Gemäß FR-A 22 52 197 wird ein chemisch härtbares Reaktivharz auf die Oberfläche eines zu beschichtenden Substrats aufgetragen und gehärtet.

### Aufgabe und Lösung

Die erwähnten Verfahren zur Herstellung von Kunststoffteilen mit kratzfester Oberfläche eignen sich durchweg nur zur Herstellung von einzelnen kratzfester Formkörpern nach dem Spritzgußverfahren oder zur Herstellung einzelner kratzfester Kunststoffplatten, aber nicht zur Herstellung kontinuierlicher Kunststoffbahnen mit kratzfester Oberfläche.

Die erwähnten Verfahren zur Herstellung von bahnförmigen Werkstoffen führen nicht zu Kunststoffbahnen mit kratzfester Oberfläche.

Die Erfinder haben sich die Aufgabe gestellt, kontinuierliche Bahnen aus Kunststoff mit kratzfester Oberfläche herzustellen.

Die Aufgabe wird erfindungsgemäß dadurch gelöst, daß bei einem Verfahren zur Herstellung kratzfest beschichteter Kunststofformkörper durch Beschichten der formbildenden Oberfläche eines Formwerkzeuges mit einem zur Bildung der kratzfesten Beschichtung geeigneten Material, Formen einer thermoplastischen Formmasse mittels des beschichteten Formwerkzeugs und Abkühlen unter die Erweichungstemperatur, als Formwerkzeug ein Walzenglättwerk verwendet und zur Bildung der kratzfesten Beschichtung eine flüssige Mischung aus wenigstens einem radikalisch polymerisierbaren Monomeren mit mehr als einer polymerisierbaren Doppelbindung und wenigstens einem radikalbildenden Initiator, der vorzugsweise bei Temperaturen zwischen der Temperatur des Walzenoberfläche und der Temperatur der thermoplastischen Formmasse oder unter der Einwirkung von UV-Strahlung Radikale bildet, auf die formbildende Oberfläche wenigstens einer Walze aufgetragen wird und die Formmasse mittels der beschichteten Walze des Walzenglättwerks zu einer kontinuierlichen Kunststoffbahn geformt wird, wobei die Beschichtung gehärtet und auf die Kunststoffbahn übertragen wird. Die Polymerisation der Monomeren setzt entweder sofort oder nach Berührung mit der Formmasse ein und gelangt zum Abschluß, bevor die Kunststoffbahn unter die Erweichungstemperatur abgekühlt ist. Die Polymerisation ist als abgeschlossen anzusehen, wenn eine harte kratzfeste Schicht erhalten wird, auch wenn sich in dieser noch unumgesetzte Doppelbindungen nachweisen lassen.

### Vorteile der Erfindung

Beim Verfahren der Erfindung können kontinuierliche Kunststofformbahnen mit kratzfester Oberfläche unter Verwendung üblicher, vorhandener Walzenglättwerke erzeugt werden. Zur Herstellung des Kunststoffbahnen können herkömmliche extrudierbare Formmassen ohne reaktive Gruppen eingesetzt werden. Diese Vorteile werden durch leicht und schnell ausführbare Verfahrensmaßnahmen erreicht, die das Herstellungsverfahren nicht übermäßig verzögern und verteuern.

### Anwendung der Erfindung

Das Verfahren der Erfindung eigent sich zur Herstellung von endlos extrudierten, d.h.kontinuierlichen Kunststoffbahnen mit einseitig oder beidseitig kratzfester Oberfläche. Die Breite der Bahn ist nur durch die Breite des verfügbaren Glättwerks begrenzt. Naturgemäß hat die Erfindung für die Herstellung von Bahnen mit hochglänzender Oberfläche, insbesondere aus glasklarem Kunststoff, die größte Bedeutung.

Geeignete spritzbare Kunststofformmassen sind z.B. Polyäthylen, Polypropylen, Polystyrol und Polyvinylchlorid. Bevorzugt sind Polycarbonate, wie Bisphenol-A-Polycarboanat, und insbesondere Acrylglas, worunter Homo- und Copolymerisate des Methylmethacrylats (mit einem MMA-Anteil >80%) verstanden werden.

### Ausführung der Erfindung

Die Erfindung beruht auf der Übertragung der sog. "In-Mold-Coating"-Technik auf die Herstellung von extrudierten Kunststoffbahnen durch Extrusion einer thermoplastischen Formmasse durch eine Schlitzdüse zu einer flachen Bahn von beispielsweise 0,05 bis 20 mm Dicke und einer Breite zwischen 20 und 300 cm und anschließende Glättung der Bahn in einem Walzenglättwerk, in welchem die Bahn wenigstens zweimal durch einen kalibrierten Walzenspalt läuft und dabei gekühlt wird.

Zur erfindungsgemäßen Beschichtung der Walzenoberfläche kann jedes Material verwendet werden, das sich in Form eines flüssigen härtbaren Harzes auf der Walzenoberfläche zu einer geschlossenen Schicht verteilen läßt, sich bei Berührung mit der thermoplastischen Formmasse haftend mit ihr verbindet und beim Abkühlen unter die Erweichungstemperatur der Formmasse eine Oberflächenschicht von ausreichender Kratzfestigkeit erhärtet. Als kratzfest im Sinne der Erfindung gelten Beschichtungen, die härter als die Formmasse sind, aus der die Kunststoffbahn gebildet ist. Die Härte der Beschichtung kann durch Auswahl entsprechender bekannter Beschichtungsmittel den jeweiligen Anforderungen angepaßt werden. Bei Verwendung von UV-Initiatoren wird ein für UV-Strahlung hinreichend durchlässiges Material eingesetzt.

Die Haftung kann gegebenenfalls durch Reaktion von reaktiven Gruppen der Beschichtung mit coreaktiven Gruppen in der Formmasse verstärkt werden, jedoch sind solche Gruppen keine Voraussetzung für das Verfahren der Erfindung.

In der Zeitspanne vom Auftragen der Beschichtung auf die Walzenoberfläche bis zum Abkühlen der geglätteten Bahn unter die Erweichungstemperatur der thermoplastischen Formmasse findet eine Härtungsreaktion unter Bildung von Vernetzungsbrücken innerhalb der Beschichtung statt. Die Vernetzung kann z.B. durch Umsetzung von Hydroxyl - oder Aminogruppen des Polymerisats oder Vorkondensats mit coreaktiven Gruppen eines mehrfunktionellen Vernetzungsmittels, wie Amidmethylolgruppen, Isocyanatgruppen oder Oxirangruppen, eintreten. Harzsysteme dieser Art sind in großer Zahl bekannt; z.B. Phenol-Formaldehyd-Harze, Harnstoff-Formaldehyd-Harze, Melamin-Formaldehyd-Harze, Epoxid-Harze oder Isocynat-Harze.

Vorzugsweise wird als zur Bildung einer kratzfesten Beschichtung geeignetes Material eine flüssige Mischung aus wenigstens einem radikalisch polymerisierbaren Monomeren mit mehr als einer polymerisierbaren Doppelbindung und wenigstens einem radikalbildenden Initiator, der bei Temperaturen zwischen der Temperatur des Walzenoberfläche und der Temperatur der thermoplastischen Formmasse oder unter der Einwirkung von UV-Strahlung Radikale bildet, auf die Oberfläche der Walze aufgebracht.

Die Monomeren zur Bildung der kratzfesten Schicht haben wenigstens zwei und selten mehr als sechs polymerisierbaren Doppelbindungen. Diese können in Acryloyl-, Methacryloyl-, Vinyl-, Allyl- oder Methallylresten vorliegen. Bevorzugt sind Ester der Acryl-oder Methacrylsäure mit mehrwertigen alphatischen Alkoholen. Diese enthalten in der Regel 2 bis 10 Kohlenstoffatome und 2 bis 6 Hydroxylgruppen, die alle oder zum Teil verestert sein können. Beispiele solcher Monomerer sind Äthylenglykol-diacrylat und -dimethacrylat, 1,2-Propylenglykol-diacrylat und -dimethacrylat, 1,2- bzw. 1,4-Butylenglykol-diacrylat und -dimethacrylat, Glycerin-triacrylat und -trimethacrylat, Pentaerythrit-tri- und -tetra-acrylat und -methacrylat, Trimethylolpropan-triacrylat und -trimethacrylat sowie die Acrylester von Dipentaerythrit. Da unter den erwähnten Estern die der Acrylsäure schneller und vollständiger polymersieren als die der Methacrylsäure, werden mit besonderem Vorteil allein die Acrylester oder allenfalls Gemische von Acryl- und Methacrylestern verwendet, worin die ersteren deutlich überwiegen und die letzteren höchstens 30, bevorzugt nicht mehr als 15 Gew.-%, ausmachen. Monomere mit Siedepunkten über 140 Grad C sind bevorzugt.

Unter den mehrfunktionellen Monomeren führen diejenigen mit drei oder mehr Kohlenstoff-Doppelbindungen zu einer besonders hohen Vernetzungsdichte und entsprechend guter Kratzfestigkeit. Wegen ihrer meist hohen Viskosität sind sie jedoch in reiner Form bei Raumtemperatur schwer verarbeitbar. Die Viskosität kann durch einen Anteil an difunktionellen Monomeren vermindert werden. Dasselbe läßt sich durch den Zusatz monofunktioneller Monomerer erreichen, die zwar nicht zur Vernetzung beitragen, aber zu einer erhöhten Flexibilität der kratzfesten Schicht führen. Als monofunktionelle Monomere sind beispielsweise Styrol, Acrylnitril, Methacrylnitril, Monoalkylester der Acryl- und Methacrylsäure mit 1 bis 10 C-Atomen im Alkylrest oder mit substituierten Alkylresten, die beispielsweise Hydroxylgruppen als Substituenten tragen können, zu nennen.

Der Anteil der mono- und bifunktionellen Monomeren kann im Interesse einer günstigen Verarbeitungsviskosität und einer hohen Flexibilität der kratzfesten Beschichtung bis auf 70 Gew.-% der Monomermischung gesteigert werden, während der Anteil der drei- oder mehrfunktionellen Monomeren im Interesse einer hohen Kratzfestigkeit nicht unter 30 Gew.-% liegen sollte. Überraschenderweise kann das Monomerengemisch ohne Beeinträchtigung der Kratzfestigkeit bis zu 30 Gew.-% Acrylsäure oder Methacrylsäure enthalten. Die Viskosität des flüssigen Monomerengemisches liegt mit Vorteil nicht über 100 mPa s (gemessen bei 20 Grad C).

Neben oder anstelle der mono- oder difunktionellen Monomeren können zur Einstellung einer günstigen Verarbeitungsviskosität nicht polymerisierbare, flüssige, flüchtige organische Lösemittel verwendet werden. Sie müssen aus der auf die Walzenoberfläche aufgetragenen Schicht vor der Berührung mit der thermoplastischen Formmasse weitgehend oder vollständig verdampfen. Der nicht verdampfte Rest verflüchtigt sich allmählich nach dem Austritt der Bahn aus dem Walzenglättwerk.

Das Lösemittel muß, damit es verdampfen kann, einen Siedepunkt unter demjenigen der verwendeten Monomeren haben. Es ist vorteilhaft, wenn der Siedepunkt unterhalb der Temperatur der Walzenoberfläche liegt. Geeignete organische Lösemittel sind z.B. aliphatische Ester, Äther, Ketone, Chlorkohlenwasserstoffe und aromatische Kohlenwasserstoffe. Unter den Ketonen, die allgemein bevorzugt werden, ist Cyclohexanon besonders hervorzuheben.

Der radikalbildende Initiator hat die Aufgabe, die auf die Walzenoberfläche aufgetragene Schicht der Monomerenmischung durch Polymerisation zu härten. Die Härtung kann abgeschlossen sein, bevor die beschichtete Walzenoberfläche mit der thermoplastischen Formmassenbahn in Berührung tritt. In diesem Falle kann die gehärtete Schicht von der Formmasse nicht verdrängt werden. Andererseits ist die Haftung zwischen der Schicht und der abgekühlten Formmasse nicht immer voll zufriedenstellend. Eine bessere Haftung wird erzielt, wenn die Polymerisation der Schicht erst in Berührung mit der Formmasse abgeschlossen wird. Wenn die Polymerisation bis zur Berührung mit der Formmasse noch nicht weit genug fortgeschritten ist, besteht die Gefahr, daß die Schicht teilweise von der Walzenoberfläche verdrängt wird. Die Umlaufgeschwindigkeit des Walzenglättwerks wird daher zweckmäßig so eingestellt, daß die Zeitspanne zwischen dem Aufbringen der Monomermischung auf die Walzenoberfläche und der Berührung mit der thermoplastischen Formmasse zu einer teilweisen Polymerisation ausreicht, bei der die Verdrängung der Schicht vermieden, aber eine ausreichende Haftung erreicht wird.

Bei Zutritt von Luftsauerstoff zu der polymerisierenden Schicht auf der Walzenoberfläche wird die Polymerisation an der freiliegenden Oberfläche der Schicht stärker als an der Berührungsfläche mit der Walzenoberfläche gehemmt. Dadurch wird die Schicht an der Walzenoberfläche mehr oder weniger vollständig ausgehärtet, während die andere Seite solange im teilpolymerisierten Zustand verbleibt, bis durch Berührung mit der Formmasse der Luftzutritt verwehrt und die Polymerisation unter Ausbildung einer guten Haftung abgeschlossen wird. Falls trotz dieser erwünschten Inhibierungswirkung des Luftsauerstoffs eine vollständige Aushärtung der Schicht vor der Berührung mit der Formmasse erwünscht ist, so ist es ratsam, das ein Inertgas auf die Walzenoberfläche zu blasen.

Für das Verfahren der Erfindung sind radikalbildende Initiatoren mit einer Halbwertzeit < 2 min bei 100 Grad C besonders geeignet; vgl. Ullmanns Enzyklopädie der technischen Chemie, 3. Aufl., 1970, Ergänzungsband, S. 177-181. Besonders geeignet sind aliphatische Peroxydicarbonate; dazu gehören:
Diäthyl-peroxydicarbonat
Di-chloräthyl-peroxydicarbonat
Diisopropyl-peroxydicarbonat
Diisobutyl-peroxydicarbonat
Di-2-äthylhexyl-peroxydicarbonat
Dicyclohexyl-peroxydicarbonat
Di-(alkyl-cyclohexyl)-peroxydicarbonat
Di-(methyl-cyclohexyl)-peroxydicarbonat
Di-tert.butylcyclohexyl-peroxydicarbonat
Siehe dazu Swern, Organic Peroxides, John Wiley & Sons, Vol. 1, 1970, S. 68-73 und Vol. 2, 1971, S. 863-867. Als UV-Initiatoren können beispielsweise Benzophenon, Benzoinäther, ω-halogenierte Ketone, wie Trichloracetophenon, Benzildialkylketale, Thioxanthonderivate, Hydroxyalkylphenone oder Diäthoxyacetophenon verwendet werden.

Die Initiatoren, wie die oben genannten Peroxydicarbonate, werden in Mengen von 0,1 bis 10 Gew.-%, insbesondere von 1 bis 7 Gew.-%, bezogen auf das Gesamtgewicht der Monomermischung, eingesetzt. Neben Initiatoren mit einer Halbwertzeit < 2 min können solche mit > 2 min bei 100 Grad C in geringerer Menge, z.B. bis zu einem Fünftel der erstgenannten, mitverwendet werden. Als Beispiele seien Dilauroylperoxid, tert.-Butylperpivalat oder Dibenzoylperoxid genannt.

Der flüssigen Monomermischung können gewünschtenfalls weitere Zusätze beigemischt werden, beispielsweise Verlaufshilfsmittel, Antioxydantien, Antistatika oder UV-Schutzmittel. Verwendbar sind übliche, nicht polymerisierbare UV-Absorber, wie sie in Ullmanns Enzyklopädie der technischen Chemie, 4. Aufl., Band 15, Seiten 253-260, aufgeführt sind. Vorteilhafter sind jedoch polymerisierbare UV-Absorber, wie 3-(2-Benzotriazolyl>-2-hydroxy-5-tert.-octylbenzylmethacrylamid.

Das zur Bildung der kratzfesten Beschichtung geeignete Material, nämlich die aus Monomeren und Initiatoren sowie gegebenenfalls aus organischen Lösemitteln und weiteren Zusätzen bestehende Monomerenmischung, wird in einer Schichtdicke zwischen 1 und 100 Mikrometer, vorzugsweise 2 bis 50 Mikrometer auf die Walzenoberfläche aufgetragen. Die Kratzfestigkeit würde durch geringere Schichtdicken nicht gewährleistet und durch höhere Schichtdicken nicht weiter verbessert, sondern allenfalls die Elastizität und Haftfestigkeit der Schicht vermindert. Die Walzen können mittels Auftragswalzen, durch Aufrakeln, Gießen oder vorzugsweise durch Aufsprühen beschichtet werden.

Jenachdem ob die Kunststoffbahn nur auf einer oder auf beiden Seiten kratzfest beschichtet werden soll, wird die Beschichtung entweder nur auf eine Walze oder auf je eine Walze auf beiden Seiten der Kunststoffbahn aufgetragen. Es ist möglich, aber im allgemeinen nicht erforderlich, auf mehr als eine Walze auf der gleichen Seite der Kunststoffbahn Beschichtungsmaterial aufzubringen.

Das Beschichtungsmaterial kann auf die Oberflächen des ersten Walzenpaares aufgetragen werden, das die aus einer Schlitzdüse extrudierte thermoplastische Kunststoffbahn in einem dazwischen gebildeten Walzenspalt aufninmmt. Vorzugsweise wird es auf eine bzw. zwei der nachfolgenden Walzen aufgetragen, so daß es erst im zweiten bzw. dritten Walzenspalt mit der Kunststoffbahn in Berührung tritt. Das hat den Vorteil, daß dort die Oberfläche der Bahn schon teilweise verfestigt ist und ein höherer Glanz erzielt wird. Der Abstand der Auftragstelle vom Walzenspalt wird dabei gegebenenfalls so bemessen, daß die Laufzeit bis zur Berührung mit der Kunststoffbahn für die Verdunstung des Lösemittels oder die partielle oder vollständige Kondensation bzw. Polymerisation der Beschichtung ausreicht.

Die Walzenoberfläche hat in der Regel eine Temperatur zwischen 40 und 180 Grad C. Die aufgebrachte Schicht der Monomerenmischung nimmt diese Temperatur an, es sei denn, daß sie durch die Verdunstung des Lösemittels erniedrigt oder durch die zusätzliche Einwirkung eines Wärmestrahlers erhöht wird. Die Polymerisation verläuft in dem genannten Temperaturbereich schnell und kann - insbesondere bei Ausschluß von Luftsauerstoff - innerhalb von 5 bis 600 Sekunden abgeschlossen sein. Die bevorzugte Zeitspanne zwischen dem Aufbringen der Schicht und dem Einspritzen der Formmasse beträgt 1 bis 20 sec.
Sobald die Schicht im gewünschten Maße gehärtet ist, kann sie mit der Kunststoffbahn im schmelzflüssigen oder thermoelastischen Zustand in Berührung gebracht werden. Die endgültige Aushärtung erfolgt in der Zeit bis zur Abkühlung unter die Erweichungstemperatur.

Die Güte der kratzfesten Schicht auf dem fertigen Formteil hängt von der Zusammensetzung der verwendeten Monomerenmischung ab, insbesondere von der Vernetzungsdichte, der Elastizität und der Haftung an der darunterliegenden Formmasse. Bei zweckmäßiger Wahl der Zusammensetzung wird eine gleichwertige oder höhere Kratzfestigkeit wie mit hochwertigen Kratzfestbeschichtungen auf Polysiloxanbasis erreicht. Die besten erfindungsgemäß herstellbaren Beschichtungen werden durch Stahlwolle 00 selbst beim starken Reiben nicht zerkratzt.

### BEISPIELE

In den nachfolgenden Beispielen werden folgende Ausgangsstoffe eingesetzt.
(A) Pentaerythrit-tetraacrylat
(B) Hexandiol-1,6-diacrylat
(C) Bis-4-tert-butylcyclohexyl)-peroxydicarbonat
(D) Trimethylolpropantrisacrylat
(E) Cyclohexanon

### Beispiel 1

9,43 g eines Gemisches aus 56 Gew.-% (A) und 44 Gew.-% (B) wurden mit 1,6 g Initiatorlösung im Becherglas angerührt. Die Initiatorlösung bestand aus 10,5 Methylethylketon als Lösungsmittel, in dem 1,6 g (C) als Initiator gelöst war. Die Lösung wurde in den Becher eines Spritzapparats gegeben und kontinuierlich mittels Stickstoff als Trägergas bei 4 - 5 bar Spritzdruck in einem Abstand von 40 cm vor dem zweiten Walzenspalt auf die Oberfläche der dritten Walze eines Glättwerks mit 3 Walzen aufgesprüht. Die Walze hatte eine Oberflächentemperatur von 120°C und eine Umfangsgeschwindigkeit von 2 cm/sec, so daß bis zum Eintritt der Beschichtung in den zweiten Walzenspalt 15 sec vergingen.

Im Walzenspalt trat die beschichtete Walzenoberfläche mit einer 3 mm dicken Bahn aus PMMA-Formmasse (PLEXIGLAS Y8N, glasklar), die eine Oberflächentemperatur von 120 Grad C hatte, in Kontakt. Die Bahn folgte dem Walzenumfang über eine Länge von 45 cm und wurde danach auf eine ebene Kühlbahn geleitet.

### Beispiel 2

5,54 g einer Monomermischung, bestehend aus 21 Gew.-% (A) und 79 Gew.-% (D) wurden mit 2 Gew.-% Initiatorlösung versetzt. Die Initiatorlösung enthielt 6,6 g (E), worin 16 Gew.-% (C) gelöst waren.
Die weitere Verarbeitung erfolgte wie im Beispiel 1.

### Beispiel 3

8 g Monomermischung, bestehend aus 56 Gew.-% (A) und 44 Gew.-% (B), wurden mit 16 Gew.-% Initiatorlösung versetzt. Die Initiatorlösung bestand aus 23,4 g (E) mit 9 Gew.-% Initiator (B). Das Auftragen der Sprühlösung erfolgte wie im Beispiel 1. Die Oberflächentemperatur der Walze betrug 100°C.
Im Walzenspalt wurde die Beschichtung mit einer 2 mm dicken Bahn aus einer Polykarbonat-Formmasse (Makrolon 2800) in Kontakt gebracht. Die erhaltenen Kunststoffbahn besaß eine 10 µm dicke kratzfeste Schicht.

## Patentansprüche

1. Verfahren zur Herstellung kratzfest beschichteter Kunststofformkörper durch Beschichten der formbildenden Oberfläche eines Formwerkzeuges mit einem zur Bildung der kratzfesten Beschichtung geeigneten Material, Formen einer thermoplastischen Formmasse mittels des beschichteten Formwerkzeugs und Abkühlen unter die Erweichungstemperatur,
dadurch gekennzeichnet,
daß als Formwerkzeug ein Walzenglättwerk verwendet wird und daß zur Bildung einer kratzfesten Beschichtung eine flüssige Mischung aus wenigstens einem radikalisch polymerisierbaren Monomeren mit mehr als einer polymerisierbaren Doppelbindung und wenigstens einem radikalbildenden Initiator auf die Oberfläche wenigstens einer der Walzen des Glättwerks aufgetragen wird und die Formmasse mittels der beschichteten Walze des Walzenglättwerks zu einer kontinuierlichen Kunststoffbahn geformt wird, wobei die Beschichtung gehärtet und auf die Kunststoffbahn übertragen wird.

2. Verfahren nach Anspruch 1, dadurch gekennzeichnet, daß ein radikalbildenden Initiator verwendet wird, der bei Temperaturen zwischen der Temperatur des Walzenoberfläche und der Temperatur der thermoplastischen Formmasse oder unter der Einwirkung von UV-Strahlung Radikale bildet.

3. Verfahren nach Anspruch 2, dadurch gekennzeichnet, daß die thermoplastische Formmasse mit der beschichteten Walze in Berührung gebracht wird, wenn die Monomeren in der auf die Walze aufgetragenen Schicht teilweise polymerisiert sind.

4. Verfahren nach den Ansprüchen 2 oder 3, dadurch gekennzeichnet, daß die Mischung zur Bildung der kratzfesten Beschichtung auf die Oberfläche der Walze aufgetragen wird, wenn diese eine Temperatur zwischen 40 und 150 Grad C hat.

5. Verfahren nach den Ansprüchen 1 bis 4, dadurch gekennzeichnet, daß eine Mischung zur Bildung der kratzfesten Beschichtung aufgebracht wird, die ein flüchtiges organisches Lösemittel enthält.

6. Verfahren nach Anspruch 5, dadurch gekennzeichnet, daß ein Lösemittel verwendet wird, dessen Siedepunkt unterhalb des Siedepunktes des Monomeren bzw. des Monomerengemisches liegt.

7. Verfahren nach Anspruch 6, dadurch gekennzeichnet, daß ein von radikalisch polymerisierbaren Kohlenstoff-Doppelbindungen freies organisches Lösemittel eingesetzt wird.

8. Verfahren nach den Ansprüchen 5 bis 7, dadurch gekennzeichnet, daß die lösemittelhaltige Mischung auf die Oberfläche der Walze gesprüht und diese nach weitgehender Verflüchtigung des Lösemittels mit der thermoplastischen Formmasse in Berührung gebracht wird.

9. Verfahren nach den Ansprüchen 2 bis 8, dadurch gekennzeichnet, daß als Monomer mit mehr als einer polymersierbaren Doppelbindung eine Verbindung mit mehr als einer Acryloylgruppe eingesetzt wird.

10. Verfahren nach Anspruch 9, dadurch gekennzeichnet, daß zur Bildung der kratzfesten Beschichtung eine Mischung eingesetzt wird, in der wenigstens 70 Mol-% der polymerisierbaren Doppelbindungen in Acryloylresten enthalten sind.

11. Verfahren nach den Ansprüchen 9 oder 10 , dadurch gekennzeichnet, daß wenigstens ein Teil der eingesetzten Acrylverbindungen wenigstens drei Acryloylgruppen enthält.

12. Verfahren nach den Ansprüchen 2 bis 11, dadurch gekennzeichnet, daß polymerisierbare Monomere mit einem Siedepunkt über 140 Grad C eingesetzt werden.

13. Verfahren nach den Ansprüchen 2 bis 12, dadurch gekennzeichnet, daß ein radikalbildender Initiator mit einer Halbwertzeit unter 2 min bei 100 Grad C eingesetzt wird.

14. Verfahren nach Anspruch 13, dadurch gekennzeichnet, daß als Initiator ein aliphatisches Peroxydicarbonat eingesetzt wird.

15. Verfahren nach den Ansprüchen 1 bis 14, dadurch gekennzeichnet, daß die thermoplastische Formmasse mit einer Temperatur zwischen 80 und 350 Grad C mit der beschichteten Walze in Berührung gebracht wird.

16. Verfahren nach den Ansprüchen 3 bis 15, dadurch gekennzeichnet, daß die auf die Oberfläche der Walze aufgebrachte Schicht aus radikalisch polymerisierbaren Monomeren während der teilweisen Polymerisation der Einwirkung von Luftsauerstoff ausgesetzt wird.

17. Verfahren nach den Ansprüchen 2 - 15, dadurch gekennzeichnet, daß die thermoplastische Formmasse 1 bis 20 sec nach dem Aufbringen der polymerisierbaren Monomeren auf die Oberfläche der Walze mit dieser in Berührung gebracht wird.

## Claims

1. A process for preparing plastics moulded bodies with a scratch-proof coating by coating the shaping surface of a moulding tool with a material suitable for forming the scratch-proof covering, moulding a thermoplastic compound by means of the coated moulding tool and cooling below the softening temperature, characterised in that a calender is used as moulding tool, and that, in order to produce a scratch-proof coating, a liquid mixture of at least one radically polymerisable monomer having more than one polymerisable double bond and at least one radical-forming initiator is applied onto the surface of at least one roller of the calender and the compound is moulded into a continuous plastics sheet, by means of the coated roller of the calender, whereby the coating is hardened and transferred to the plastics sheet.

2. A process according to claim 1, characterised in that a radical-forming initiator is used which produces radicals under the effect of UV radiation or at temperatures ranging from the temperature of the roller surface to that of the thermoplastic moulding.

3. A process according to claim 2, characterised in that the thermoplastic moulding compound is brought into contact with the coated roller when the monomers are partly polymerised in the layer applied to the roller.

4. A process according to claims 2 or 3, characterised in that the mixture, forming the scratch-proof coating, is applied onto the surface of the roller, when said roller has a temperature of from 40 to 150°C.

5. A process according to claims 1 to 4, characterised in that a mixture applied to form the scratch-proof coating contains a volatile organic solvent.

6. A process according to claim 5, characterised in that a solvent is used, whose boiling point is below the boiling point of the monomer or the monomer mixture.

7. A process according to claim 6, characterised in that an organic solvent is used which is free from radically polymerisable carbon double bonds.

8. A process according to claims 5 to 7, characterised in that the mixture containing the solvent is sprayed onto the surface of the roller and said surface is brought into contact with the thermoplastic moulding compound after the solvent has largely volatised.

9. A process according to claims 2 to 8, characterised in that a compound which has more than one acryloyl group is used as the monomer with more than one polymerisable double bond.

10. A process according to claim 9, characterised in that a mixture is used for producing the scratch-proof coating in which at least 70 mol% of the polymerisable double bonds are contained in acryloyl groups.

11. A process according to claims 9 or 10, characterised in that at least part of the acrylic compounds used contain at least three acryloyl groups.

12. A process according to claims 2 to 11, characterised in that polymerisible monomers are used which have a boiling point above 140°C.

13. A process according to claims 2 to 12, characterised in that a radical-forming initiator is used which has a half life of less than 2 min at 100°C.

14. A process according to claim 13, characterised in that an aliphatic peroxydicarbonate is used as initiator.

15. A process according to claims 1 to 14, characterised in that the thermoplastic moulding compound is brought into contact with the coated roller when said compound has a temperature of between 80 and 350°C.

16. A process according to claims 3 to 15, characterised in that a layer of radically polymerisable monomers, applied onto the surface of the roller, is exposed during the partial polymerisation to the effect of atmospheric oxygen.

17. A process according to claims 2 to 15, characterised in that the thermoplastic moulding compound is brought into contact with the surface of the roller for 1 to 20 seconds after the polymerisable monomers have been applied to said surface.

## Revendications

1. Procédé de fabrication de corps façonnés en matière plastique rendus résistants à l'abrasion par une couche de revêtement, par enduction de la surface de façonnage d'un outil de formage avec une matière propre à la formation de l'enduit résistant à l'abrasion, façonnage d'une masse à mouler thermoplastique au moyen de l'outil de formage enduit, et refroidissement en-dessous de la température de ramollissement, caractérisé en ce qu'on utilise, comme outil de formage, une lisseuse à cylindres et en ce que, pour la formation d'un enduit résistant a l'abrasion, on applique, sur la surface de l'un au moins des cylindres de la lisseuse, un mélange liquide d'au moins un monomère susceptible de polymérisation radicalaire et renfermant plus d'une double liaison polymérisable et d'au moins un initiateur radicalaire, et on transforme la masse à mouler en une nappe continue de matière plastique au moyen du cylindre enduit, l'enduit étant ainsi durci et transféré sur la nappe de matière plastique.

2. Procédé selon la revendication 1, caractérisé en ce qu'on utilise un initiateur radicalaire qui forme des radicaux à des températures comprises entre la température de la surface du cylindre et la température de la masse a mouler thermoplastique ou sous l'action du rayonnement ultraviolet.

3. Procédé selon la revendication 2, caractérisé en ce que la masse a mouler thermoplastique est mise en contact avec le cylindre enduit alors que les monomères contenus dans la couche appliquée sur le cylindre sont partiellement polymérisés.

4. Procédé selon la revendication 2 ou 3, caractérisé en ce que le mélange pour la formation de l'enduit résistant à l'abrasion est appliqué sur la surface du cylindre alors que celui-ci est à une température comprise entre 40 et 150°C.

5. Procédé selon l'une quelconque des revendications 1 à 4, caractérisé en ce qu'on applique un mélange pour la formation de l'enduit résistant à l'abrasion qui contient un solvant organique volatil.

6. Procédé selon la revendication 5, caractérisé en ce qu'on utilise un solvant dont le point d'ébullition se situe au-dessous du point d'ébullition du monomère ou du mélange de monomères.

7. Procédé selon la revendication 6, caractérisé en ce qu'on utilise un solvant organique dépourvu de doubles liaisons de carbone susceptibles de polymérisation radicalaire.

8. Procédé selon l'une quelconque des revendications 5 à 7, caractérisé en ce que le mélange contenant un solvant est pulvérisé sur la surface du cylindre et celle-ci est mise en contact avec la masse à mouler thermoplastique après que le solvant se soit volatilisé dans une large mesure.

9. Procédé selon l'une quelconque des revendications 2 à 8, caractérisé en ce qu'on utilise, comme monomère renfermant plus d'une double liaison polymérisable, un composé comportant plus d'un groupement acryloyle.

10. Procédé selon la revendication 9, caractérisé en ce que l'on utilise, pour la formation de l'enduit résistant à l'abrasion, un mélange dans lequel 70% en moles au moins des doubles liaisons polymérisables sont contenues dans des restes acryloyle.

11. Procédé selon la revendication 9 ou 10, caractérisé en ce qu'une partie au moins des composés acryliques utilisés contient au moins trois groupements acryloyle.

12. Procédé selon l'une quelconque des revendications 2 à 11, caractérisé en ce qu'on utilise des monomères polymérisables ayant un point d'ébullition supérieur à 140°C.

13. Procédé selon l'une quelconque des revendications 2 à 12, caractérisé en ce qu'on utilise un initiateur radicalaire ayant un temps de demi-réaction inférieur à 2 mn à 100°C.

14. Procédé selon la revendication 13, caractérisé en ce qu'on utilise, comme initiateur, un peroxydicarbonate aliphatique.

15. Procédé selon l'une quelconque des revendications 1 à 14, caractérisé en ce que la masse à mouler thermoplastique est mise en contact avec le cylindre enduit à une température comprise entre 80 et 350°C.

16. Procédé selon l'une quelconque des revendications 3 à 15, caractérisé en ce que la couche de monomères susceptibles de polymérisation radicalaire qui est appliquée sur la surface du cylindre est exposée, pendant la polymérisation partielle, à l'action de l'oxygène de l'air.

17. Procédé selon l'une quelconque des revendications 2 à 15, caractérisé en ce que la masse à mouler thermoplastique est mise en contact avec la surface du cylindre dans un délai de 1 à 20 s après l'application des monoméres polymérisables sur cette surface.
